# EUROPÄISCHE PATENTSCHRIFT

(11) **EP 2 326 921 B1**
(45) Veröffentlichungstag und Bekanntmachung des Hinweises auf die Patenterteilung: **19.10.2011**
(21) Anmeldenummer: 09780014.8
(22) Anmeldetag: 30.06.2009
(51) Int. Cl.: G01D 5/249, G01D 5/347

(54) **DREHGEBER UND BAUREIHE VON DREHGEBERN**
ROTARY TRANSDUCER AND SERIES OF ROTARY TRANSDUCERS
CAPTEUR DE ROTATION ET SÉRIE DE CAPTEURS DE ROTATION

(30) Priorität: 10.07.2008 DE 102008032419
(43) Veröffentlichungstag der Anmeldung: 01.06.2011
(73) Patentinhaber: Dr. Johannes Heidenhain GmbH, 83301 Traunreut (DE)
(72) Erfinder: SCHROTER, Andreas, 83278 Traunstein (DE); RIEPERTINGER, Sebastian, 83139 Söchtenau (DE)
(86) Internationale Anmeldenummer: PCT/EP2009/058147
(87) Internationale Veröffentlichungsnummer: WO 2010/003845

(56) Entgegenhaltungen:
- EP-A- 0 533 973
- DE-A1- 3 537 235
- DE-A1- 19 806 661
- DE-C1- 3 427 709
- DE-U1- 29 623 537
- GB-A- 2 314 139

## Beschreibung

Die Erfindung betrifft einen Drehgeber mit einem Gehäuse gemäß dem Patentanspruch 1 sowie eine Baureihe von Drehgebern gemäß dem Anspruch 8.

Drehgeber dienen zur Messung von Drehbewegungen eines drehbar gelagerten Körpers, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einem Drehgeber auch lineare Bewegungen messen.

Drehgeber werden in großer Zahl als so genannte Motor-Feed-Back-Einrichtungen verwendet und dienen in dieser Anwendung zur Bildung von Positions- bzw. Winkelinformationen, die für die Kommutierung von Elektroantrieben herangezogen werden. Beispielsweise wird bei Synchronmotoren sofort nach dem Einschalten der Versorgungsspannung eine Information über die absolute Rotorposition benötigt. Dafür eignen sich die Drehgeber mit zusätzlichen Kommutierungssignalen - sie liefern eine relativ grobe Positionsinformation - und die absoluten Drehgeber in Single- oder Multiturn-Ausführung, die sofort die exakte Winkelposition mit wenigen Winkelsekunden Genauigkeit ausgeben.

Bei der Montage dieser Messgeräte müssen die Rotorpositionen des Elektromotors und des Drehgebers einander zugeordnet werden, um möglichst konstante Motorströme zu erreichen. Eine unzureichende Zuordnung zur Elektromotorischen Kraft verursacht starke Motorgeräusche und hohe Verlustleistungen.

Bei herkömmlichen Drehgebern wird zu diesem Zweck zunächst der Rotor des Elektromotors, bzw. dessen Welle, durch Beaufschlagen mit Gleichstrom in eine Vorzugslage gebracht. Drehgeber mit Kommutierungssignalen werden dann grob ausgerichtet, z.B. mit Hilfe von Markierungsstrichen am Drehgeber oder einem Referenzmarkensignal. Dann wird die Welle des Drehgebers auf der Elektromotorwelle montiert. Die Feinjustage erfolgt danach mit Hilfe eines Phasenwinkel-Messgeräts, wobei der Stator des Drehgebers so lange verdreht wird, bis das Phasenwinkel-Messgerät etwa den Wert Null als Abstand zu einer Referenzmarke anzeigt. Schließlich kann in dieser Lage eine Ausgleichskupplung, insbesondere eine Statorkupplung, endgültig am Motorgehäuse fixiert werden.

Absolute Drehgeber werden zuerst komplett montiert. Danach wird der Vorzugsposition des Elektromotors über eine Nullpunktverschiebung der Wert "Null" zugeordnet. Als Hilfsmittel dient dazu eine Elektronik einschließlich eines zugehörigen Softwarepakets, beispielsweise in einem mit dem Drehgeber verbundenen Computer. Dadurch kann eine Nullpunktverschiebung vorgenommen werden.

Aus der DE 19729452 C2 ist ein Adapterbauteil bekann, welches eine winkelmäßige Zuordnung zwischen einer Drehgeberwelle und einer Motorwelle ermöglicht. Zur Feinjustierung muss auch hier der Stator gedreht und schließlich eine Statorkupplung am Motorgehäuse festgelegt werden.

Die vorbekannten Vorrichtungen mit Statorkupplungen haben den Nachteil, dass die Feinjustierung im Feld individuell für jede Einbausituation vorgenommen werden muss und dass dann häufig eine Festlegung der mechanisch empfindlichen Ausgleichskupplungen im Feld erforderlich ist.

Es ist auch bekannt, dass eine Vereinfachung des Anbaus von Drehgebern, die Kommutierungssignale liefern, durch mechanisch codierte Rotorkupplungen vorgenommen werden kann, wie dies beispielsweise in der Offenlegungsschrift WO 2008/034768 gezeigt ist. Mit einer Verwendung von Rotorkupplungen geht aber stets eine Einbuße der Genauigkeit der Kommutierungssignale einher.

DE 296 23537 U offenbart ebenfalls einem abstuten Drehgeber.

Der Erfindung liegt die Aufgabe zugrunde, einen Drehgeber der eingangs genannten Art zu schaffen, der mit einfachen Mitteln anbaubar ist und durch den eine vergleichsweise hohe Messgenauigkeit erreichbar ist.

Diese Aufgabe wird erfindungsgemäß durch die Schaffung eines Drehgebers mit den Merkmalen des Patentanspruchs 1 bzw. einer Baureihe nach Patentanspruch 8 gelöst.

Demnach umfasst der erfindungsgemäße Drehgeber einen Stator und einen Rotor, wobei der Rotor mit Hilfe eines Lagers relativ zum Stator drehbar angeordnet ist. Der Rotor weist eine Welle auf, an der eine Formschlusseinrichtung sowie eine Codescheibe drehfest befestigt sind. Der Stator weist einen Körper, eine Ausgleichskupplung und ein Gehäuse auf. Dabei umfasst der Körper eine Abtasteinrichtung zur Abtastung der Codescheibe, so dass vom Drehgeber Winkelwerte in Abhängigkeit von der relativen Winkellage zwischen der Welle und dem Gehäuse ausgebbar sind. Weiterhin ist der Körper radial und axial elastisch aber drehsteif über die Ausgleichskupplung mit dem Gehäuse verbunden. Das Gehäuse weist zudem eine weitere Formschlusseinrichtung auf, wobei der Drehgeber so vorjustiert ist, dass im Betrieb des Drehgebers bei einer vorgegebenen relativen Winkellage zwischen der Formschlusseinrichtung der Welle und der weiteren Formschlusseinrichtung des Gehäuses ein vorgegebener Winkelwert durch den Drehgeber ausgebbar ist.

Der Drehgeber gibt also bei vorgegebener Orientierung der Formschlusseinrichtung der Welle relativ zur weiteren Formschlusseinrichtung des Gehäuses stets den gleichen vorgegebenen Winkelwert aus. Nachdem die Orientierung der Formschlusseinrichtungen durch die relative Drehung zwischen Rotor und Stator erzeugt werden kann, wird hier diese Orientierung als vorgegebene relative Winkellage bezeichnet.

Somit ist der Drehgeber, bedingt durch die Formschlusseinrichtungen nur referenztreu, z. B. in Bezug auf die Kommutierungssignale, an einen Elektromotor anbaubar. Der vorgegebene Winkelwert kann auch als Referenzwert bezeichnet werden.

Gemäß einer Weiterbildung der Erfindung trägt die Codescheibe eine absolute Codierung, so dass durch die Abtasteinrichtung eine absolute und eindeutige Winkellage innerhalb einer Umdrehung der Codescheibe detektierbar ist und ein absoluter Winkelwert vom Drehgeber ausgebbar ist. In diesem Fall kann es vorteilhaft sein, wenn der Stator einen nicht-flüchtigen Speicher umfasst, in welchem entsprechend der Vorjustierung Daten gespeichert sind, welche eine Information über die relative Winkellage der beiden Formschlusseinrichtungen zueinander repräsentieren.

Mit Vorteil weist das Gehäuse einen Flansch auf, wobei die Formschlusseinrichtung an dem Flansch angeordnet sein kann.

In einer alternativen Ausgestaltung der Erfindung ist die Formschlusseinrichtung des Gehäuses als ein Passstift ausgestaltet.

Mit Vorteil ist die Formschlusseinrichtung der Welle als ein bezüglich der Achse asymmetrisches Bauteil ausgestaltet. So kann eine eindeutige Kombination mit einem Gegenstück, beispielsweise einer Elektromotorwelle, sichergestellt werden. Die Formschlusseinrichtung der Welle kann insbesondere Ausnehmungen aufweisen, die zum Beispiel als Rücksprünge in axialer Richtung ausgebildet sind.

Alternativ kann die Codescheibe eine inkrementale Codierung tragen. Insbesondere in diesem Fall kann die Ausgleichskupplung so konfiguriert sein, dass die Vorjustierung der relativen Winkellage zwischen den Formschlusseinrichtungen durch relative Bewegung zwischen der Ausgleichskupplung und dem Körper und / oder zwischen der Ausgleichskupplung und dem Gehäuse durchführbar ist. Zu diesem Zweck kann die Ausgleichskupplung Langlöcher aufweisen zur Befestigung der Ausgleichskupplung am Gehäuse mit Schrauben.

Gemäß einem weiteren Aspekt umfasst die Erfindung eine Baureihe von Drehgebern. Dabei ist jeder Drehgeber der Baureihe so vorjustiert, dass im Betrieb des jeweiligen Drehgebers bei ein und derselben relativen Winkellage zwischen der jeweiligen Formschlusseinrichtung der Welle und der jeweiligen weiteren Formschlusseinrichtung des jeweiligen Gehäuses ein und derselbe vorgegebene Winkelwert durch den Drehgeber ausgebbar ist. Durch eine individuelle Vorjustierung können dann im jeweiligen nicht-flüchtigen Speicher von Drehgebern innerhalb der Baureihe unterschiedliche Daten, entsprechend der Vorjustierung, gespeichert sein, welche Informationen über die relative Winkellage der beiden Formschlusseinrichtungen zueinander repräsentieren.

Alternativ - insbesondere wenn die Baureihe Drehgeber umfasst, die jeweils eine Codescheibe mit einer inkrementalen Codierung tragen - können die Drehgeber Formschlusseinrichtungen der Welle umfassen, die winkelmäßig jeweils gleich relativ zur Codescheibe orientiert sind.

Grundsätzlich kann die Baureihe Drehgeber umfassen, welche einer oder mehrere der hier offenbarten Drehgeber-Merkmale aufweisen.

Zusätzliche vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

Es zeigen:
- Figur 1: eine perspektivische Schnitt-Ansicht eines Drehgebers,
- Figur 2: einen Längschnitt durch den Drehgeber,
- Figur 3: eine Seitenansicht des Drehgebers.

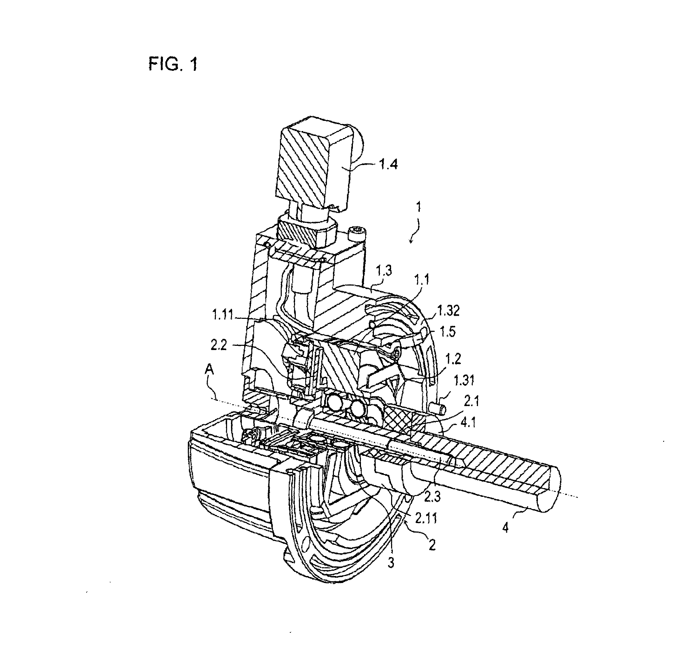

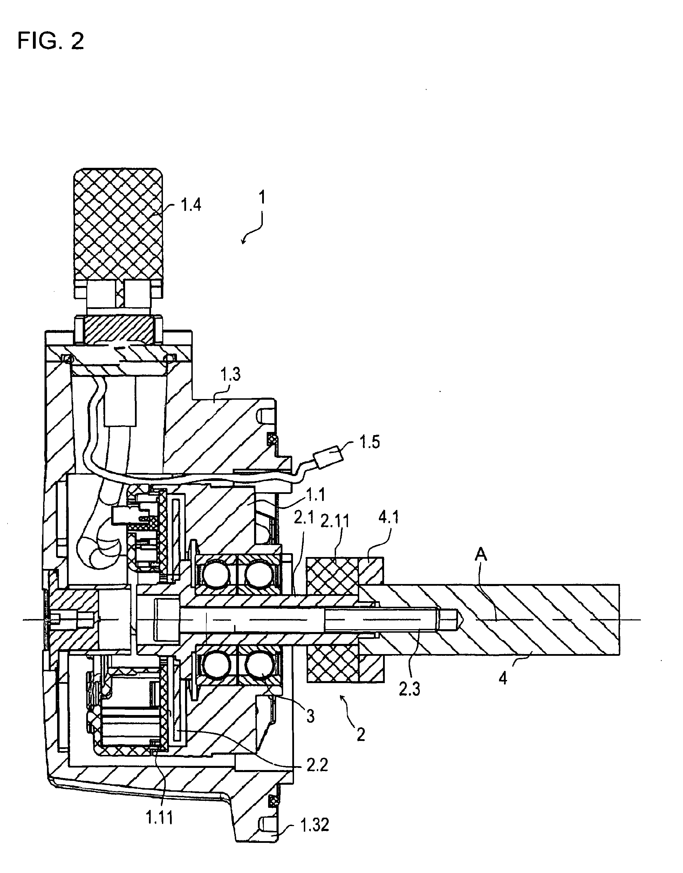

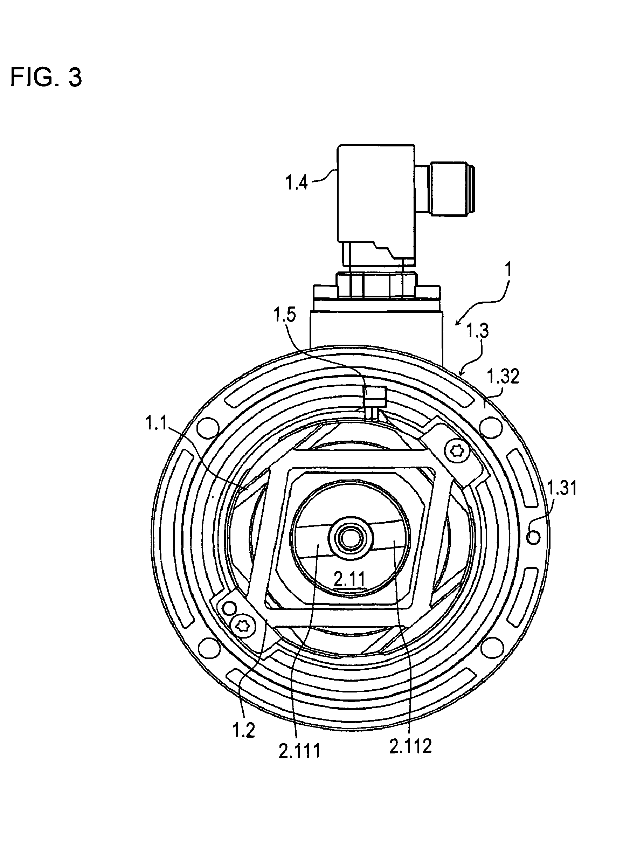

Der in den Figuren 1 bis 3 dargestellte Drehgeber besteht aus einem Stator 1, einem Rotor 2 und einem Lager 3. Dabei ist der Rotor 2 mit Hilfe des Lagers 3 relativ zum Stator 1 um eine Achse A drehbar angeordnet. Im vorgestellten Ausführungsbeispiel dient der Drehgeber zur Erzeugung von Kommutierungssignalen für einen Elektromotor, an den der Drehgeber angeflanscht werden kann.

Der Stator umfasst innen liegend·einen Körper 1.1, an dem unter anderem eine Abtasteinrichtung 1.11 festgelegt ist. Die Abtasteinrichtung 1.11 umfasst eine Leiterplatte mit Detektoren, beispielsweise Fotodetektoren. Zudem sind auf der Leiterplatte elektrische Bauelemente zur Signalformung - beispielsweise zur Verstärkung und Digitalisierung - der von den Detektoren gelieferten Abtastsignalen angeordnet. Insbesondere ist auf der Leiterplatte auch ein elektronisches Bauteil montiert, welches einen nicht-flüchtigen Speicher umfasst.

Um den Körper 1.1 herum ist ein kappenförmiges Gehäuse 1.3 angeordnet, welches die innen liegenden Bauteile des Drehgebers hermetisch gegen äußere Einflüsse abschließt. Derartige Drehgeber werden häufig in vergleichsweise rauen Industrieumgebungen eingesetzt, weshalb es wichtig ist, dass das entsprechende Gehäuse 1.3 den Innenraum des Drehgebers dicht umschließt. Am Gehäuse 1.3, bzw. an einem Flansch 1.32 des Gehäuses 1.3, ist ein Passstift 1.31 angeordnet, der als Formschlusseinrichtung dient. Durch eine Ausgleichskupplung 1.2 ist der Körper 1.1 mit dem Gehäuse 1.3 axial und radial elastisch verbunden. Die Ausgleichskupplung 1.2 ist gleichwohl so konstruiert, dass diese in Umfangsrichtung steif ist. Ferner weist die Ausgleichskupplung 1.2 Bohrungen zur Befestigung mit Schrauben am Gehäuse 1.3 auf. Zur elektrischen Anbindung des Drehgebers mit einer Spannungsversorgung und einer Folgeelektronik ist am Gehäuse 1.3 eine elektrische Kupplung 1.4 montiert. Durch diese elektrische Kupplung 1.4 werden zudem Temperatursignale an die Folgeelektronik weitergeleitet. Die entsprechenden Temperatursensoren, z. B. Widerstandsfühler, sind im Elektromotor platziert, wobei die erzeugten Temperatursignale mit Hilfe eines Kabels 1.5, das durch den Stator 1 hindurch geführt ist, übertragen werden.

Dem Rotor 2 ist eine Welle 2.1 zum Anschluss an eine Motorwelle 4 zugeordnet. Sowohl die Welle 2.1 als auch die Motorwelle 4 weisen Formschlusseinrichtungen 2.11, 4.1 auf, welche jeweils drehfest mit der Welle 2.1 bzw. mit der Motorwelle 4 verbunden sind. An der Welle 2.1 ist weiterhin eine Codescheibe 2.2 drehfest festgelegt. Die Codescheibe 2.2 ist also um die Achse A drehbar und wird im gezeigten Beispiel lichtelektrisch von der Abtasteinrichtung 1.11 abgetastet. Im vorliegenden Ausführungsbeispiel trägt die Codescheibe 2.2 eine absolute Codierung, so dass durch die Abtasteinrichtung 1.11 eine absolute und eindeutige Winkellage innerhalb einer Umdrehung der Codescheibe 2.2 detektiert wird.

Beim Hersteller des Drehgebers wird zunächst der Passstift 1.31 in eine entsprechende Bohrung des Flansches 1.32 gepresst. Ebenso wird durch einen Presssitz eine drehfeste Verbindung zwischen einem Formschlussteil 2.11 als Formschlusseinrichtung und der Welle 2.1 hergestellt. Das Formschlussteil 2.11, hier ein präzise gefertigtes Metallteil, weist zwei unterschiedlich breite Ausnehmungen 2.111, 2.112 auf, so dass dieses bezüglich der Achse A asymmetrisch, also nicht punktsymmetrisch zu einem Punkt auf der Achse A, ausgestaltet ist.

Zur Vorjustierung wird zunächst der Drehgeber mit dem Flansch 1.32 an einer Hilfsvorrichtung montiert. Dabei umfasst die Hilfsvorrichtung eine Bohrung, in welcher der Passstift 1.31 spielfrei eingedrückt wird. Als nächstes greift eine Justiervorrichtung in die Ausnehmungen 2.111, 2.112 spielfrei ein, so dass die Justiervorrichtung eine Drehbewegung in die Welle 2.1 einleiten kann. In dieser Phase ist eine winkeltreue Montage des Drehgebers an der Hilfsvorrichtung sichergestellt.

Danach wird an die elektrische Kupplung 1.4 ein Kabel zu einer Elektronik angesteckt. Mit Hilfe der Elektronik kann die von der Abtasteinheit 1.1 erfasste absolute Winkelinformation ausgelesen werden.

Dann wird die Justiervorrichtung solange gedreht, bis eine vorgegebene Relativwinkelstellung zwischen dem Formschlussteil 2.11 und dem Passstift 1.31 vorliegt. Beispielsweise wenn eine Stellung erreicht ist, in der die radiale Symmetrieachse der Ausnehmungen 2.111, 2.112 die Mitte des Passstifts 1.31 schneidet. In dieser Stellung, welche beim Hersteller sehr exakt angefahren werden kann, z. B. auf ± 0,25°, wird die absolute Winkellage bestimmt und ggf. ein entsprechender Winkelwert über die elektrische Kupplung 1.4 vom Drehgeber ausgegeben. Diese Daten, welche die Information über die relative Winkellage zwischen dem Formschlussteil 2.11 und dem Passstift 1.31 zueinander repräsentieren, werden im nicht-flüchtigen Speicher als Referenzwert hinterlegt und im späteren Betrieb des Drehgebers berücksichtigt. Sämtliche Drehgeber einer Baureihe werden nach der gleichen Methode referenziert. Dadurch, dass bei jedem Drehgeber innerhalb einer Baureihe Fertigungstoleranzen vorliegen, können nach der individuellen Vorjustierung in jedem Drehgeber im jeweiligen nicht-flüchtigen Speicher jeweils unterschiedliche Daten gespeichert sein.

Beim Anbau des Drehgebers im Feld wird der Passstift 1.31 in eine entsprechen vorbereitete präzise Bohrung im Elektromotorgehäuse eingedrückt. Gleichzeitig wird das Formschlussteil 2.11 auf der Welle 2.1 in eine Formschlusseinrichtung 4.1 an der Motorwelle 4 mit Hilfe der Schraube 2.3 eingeführt. Durch die asymmetrische Ausgestaltung können die Welle 2.1 und die Motorwelle 4 nur in einer vorgegebenen Winkelstellung miteinander in Eingriff gebracht werden. Im zusammengebauten Zustand greifen das Formschlussteil 2.11 und die Formschlusseinrichtung 4.1 dann spielfrei ineinander. Durch die Schraubverbindung wird zwischen der Welle 2.1 und der Motorwelle 4 eine starre Verbindung hergestellt. Bei der Montage des Drehgebers an den Elektromotor muss also keine Justierung des Drehgebers mehr vorgenommen werden.

Im Betrieb des Drehgebers ist sichergestellt, dass bei einer bestimmten Winkellage, hier beispielsweise in der Position in welcher die radiale Symmetrieachse der Ausnehmungen 2.111, 2.112 die Mitte des Passstifts 1.31 schneidet, stets der Referenzwert an die Folgeelektronik ausgeben wird, so dass eine überaus präzise Kommutierung des Elektromotors erreicht wird.

Als weiterer Vorteil können Drehgeber der gleichen Baureihe beliebig ohne Justiermaßnahmen im Feld ausgetauscht werden, weil sämtliche Drehgeber in ihrem nicht-flüchtigen Speicher eine entsprechende Korrekturlage hinterlegt haben.

## Patentansprüche

1. Drehgeber umfassend einen Stator (1) und einen Rotor (2), wobei der Rotor (2) mit Hilfe eines Lagers (3) relativ zum Stator (1) drehbar angeordnet ist, und
der Rotor (2)
- eine Welle (2.1) aufweist, wobei an der Welle (2.1) eine Formschlusseinrichtung (2.11) sowie eine Codescheibe (2.2) drehfest befestigt sind,
der Stator (1)
- einen Körper (1.1) mit einer Abtasteinrichtung (1.11) zur Abtastung der Codescheibe (2.2),
- eine Ausgleichskupplung (1.2) und
- ein Gehäuse (1.3) aufweist, wobei
der Körper (1.1) radial und axial elastisch aber drehsteif über die Ausgleichskupplung (1.2) mit dem Gehäuse (1.3) verbunden ist, **dadurch gekennzeichnet, dass**
das Gehäuse (1.3) eine weitere Formschlusseinrichtung (1.31) aufweist, wobei der Drehgeber so vorjustiert ist, dass im Betrieb des Drehgebers bei einer vorgegebenen relativen Winkellage zwischen der Formschlusseinrichtung (2.11) der Welle (2.1) und der weiteren Formschlusseinrichtung (1.31) des Gehäuses (1.3) ein vorgegebener Winkelwert durch den Drehgeber ausgebbar ist.

2. Drehgeber gemäß dem Anspruch 1, **dadurch gekennzeichnet, dass** die Codescheibe (2.2) eine absolute Codierung trägt, so dass durch die Abtasteinrichtung (1.11) eine absolute und eindeutige Winkellage innerhalb einer Umdrehung der Codescheibe (2.2) detektierbar ist.

3. Drehgeber gemäß dem Anspruch 1 oder 2, **dadurch gekennzeichnet, dass** der Stator (1) einen nicht-flüchtigen Speicher umfasst, in welchem entsprechend der Vorjustierung Daten gespeichert sind, welche eine Information über die relative Winkellage der beiden Formschlusseinrichtungen (1.31; 2.11) zueinander repräsentieren.

4. Drehgeber gemäß einem der vorhergehenden Ansprüche, **dadurch gekennzeichnet, dass** das Gehäuse (1.3) einen Flansch (1.32) aufweist, und die Formschlusseinrichtung (1.31) an dem Flansch (1.32) angeordnet ist.

5. Drehgeber gemäß einem der vorhergehenden Ansprüche, **dadurch gekennzeichnet, dass** die Formschlusseinrichtung (1.31) des Gehäuses (1.3) als ein Passstift ausgestaltet ist.

6. Drehgeber gemäß einem der vorhergehenden Ansprüche, **dadurch gekennzeichnet, dass** die Formschlusseinrichtung (2.11) der Welle (2.1) als ein bezüglich der Achse (A) asymmetrisches Bauteil ausgestaltet ist.

7. Drehgeber gemäß einem der vorhergehenden Ansprüche, **dadurch gekennzeichnet, dass** die Ausgleichskupplung (1.2) so konfiguriert ist, dass die Vorjustierung der relativen Winkellage zwischen den Formschlusseinrichtungen (1.31; 2.11) durch relative Bewegung zwischen der Ausgleichskupplung (1.2) und dem Körper (1.1) und / oder dem Gehäuse (1.3) durchführbar ist.

8. Baureihe von Drehgebern, wobei jeder Drehgeber der Baureihe einen Stator (1) und einen Rotor (2) umfasst, wobei jeweils der Rotor (2) mit Hilfe eines Lagers (3) relativ zum Stator (1) drehbar angeordnet ist, und jeder Rotor (2)
- eine Welle (2.1) aufweist, wobei an der Welle (2.1) eine Formschlusseinrichtung (2.11) sowie eine Codescheibe (2.2) drehfest befestigt sind,
jeder Stator (1)
- einen Körper (1.1) mit einer Abtasteinrichtung (1.11) zur Abtastung der Codescheibe (2.2),
- eine Ausgleichskupplung (1.2) und
- ein Gehäuse (1.3) aufweist, wobei
der Körper (1.1) radial und axial elastisch aber drehsteif über die Ausgleichskupplung (1.2) mit dem Gehäuse (1.3) verbunden ist, **dadurch gekennzeichnet, dass**
das Gehäuse (1.3) eine weitere Formschlusseinrichtung (1.31) aufweist, wobei jeder Drehgeber so vorjustiert ist, dass im Betrieb des jeweiligen Drehgebers bei ein und derselben relativen Winkellage zwischen der jeweiligen Formschlusseinrichtung (2.11) der Welle (2.1) und der jeweiligen weiteren Formschlusseinrichtung (1.31) des jeweiligen Gehäuses (1.3) ein vorgegebener Winkelwert durch den Drehgeber ausgebbar ist.

9. Baureihe von Drehgebern gemäß dem Anspruch 8, **dadurch gekennzeichnet, dass** jeder Drehgeber der Baureihe gemäß einem der Ansprüche 2 bis 7 ausgestaltet ist.

## Claims

1. Rotary encoder, comprising a stator (1) and a rotor (2), wherein the rotor (2) is arranged such that it can rotate relative to the stator (1) with the aid of a bearing (3), and
the rotor (2)
- has a shaft (2.1), wherein a form-fitting means (2.11) and a code disc (2.2) are fastened in a rotationally fixed manner to the shaft (2.1),
the stator (1)
- has a body (1.1) with a scanning means (1.11) for scanning the code disc (2.2),
- a compensating coupling (1.2) and
- a housing (1.3), wherein
the body (1.1) is connected to the housing (1.3) via the compensating coupling (1.2) in a radially and axially elastic but rotationally rigid manner, **characterised in that**
the housing (1.3) has a further form-fitting means (1.31), wherein the rotary encoder is preadjusted in such a manner that, when the rotary encoder is operating, a predefined angular value can be output by the rotary encoder at a predefined relative angular position between the form-fitting means (2.11) of the shaft (2.1) and the further form-fitting means (1.31) of the housing (1.3).

2. Rotary encoder according to Claim 1, **characterised in that** the code disc (2.2) supports an absolute code, so that an absolute and unambiguous angular position within one revolution of the code disc (2.2) can be detected by the scanning means (1.11).

3. Rotary encoder according to Claim 1 or 2, **characterised in that** the stator (1) comprises a non-volatile memory, in which data are stored corresponding to the preadjustment, which represent the information on the relative angular position of the two form-fitting means (1.31; 2.11) with respect to each other.

4. Rotary encoder according to one of the preceding claims, **characterised in that** the housing (1.3) has a flange (1.32), and the form-fitting means (1.31) is arranged on the flange (1.32).

5. Rotary encoder according to one of the preceding claims, **characterised in that** the form-fitting means (1.31) of the housing (1.3) is configured as a dowel pin.

6. Rotary encoder according to one of the preceding claims, **characterised in that** the form-fitting means (2.11) of the shaft (2.1) is configured as a component which is asymmetrical with respect to the axis (A).

7. Rotary encoder according to one of the preceding claims, **characterised in that** the compensating coupling (1.2) is configured in such a manner that the preadjustment of the relative angular position between the form-fitting means (1.31; 2.11) can be carried out by relative movement between the compensating coupling (1.2) and the body (1.1) and/or the housing (1.3).

8. Series of rotary encoders, wherein each rotary encoder in the series comprises a stator (1) and a rotor (2), wherein in each case the rotor (2) is arranged such that it can rotate relative to the stator (1) with the aid of a bearing (3), and each rotor (2)
- has a shaft (2.1), wherein a form-fitting means (2.11) and a code disc (2.2) are fastened in a rotationally fixed manner to the shaft (2.1),
each stator (1)
- has a body (1.1) with a scanning means (1.11) for scanning the code disc (2.2),
- a compensating coupling (1.2) and
- a housing (1.3), wherein
the body (1.1) is connected to the housing (1.3) via the compensating coupling (1.2) in a radially and axially elastic but rotationally rigid manner, **characterised in that**
the housing (1.3) has a further form-fitting means (1.31), wherein each rotary encoder is preadjusted in such a manner that, when the respective rotary encoder is operating, a predefined angular value can be output by the rotary encoder at one and the same relative angular position between the respective form-fitting means (2.11) of the shaft (2.1) and the respective further form-fitting means (1.31) of the respective housing (1.3).

9. Series of rotary encoders according to Claim 8, **characterised in that** each rotary encoder in the series is configured according to one of Claims 2 to 7.

## Revendications

1. Capteur de rotation comprenant un stator (1) et un rotor (2), le rotor (2) étant disposé de façon rotative à l'aide d'un palier (3) par rapport au stator (1),
et le rotor (2)
- présentant un arbre (2.1), un dispositif de liaison par complémentarité de forme (2.11) et un disque de code (2.2) étant fixés de façon solidaire en rotation sur l'arbre (2.1),
le stator (1) présentant
- un corps (1.1) avec un dispositif de balayage (1.11) pour le balayage du disque de code (2.2),
- un accouplement de compensation (1.2) et
- un carter (1.3),
le corps (1.1) étant relié radialement et axialement, de façon élastique mais rigide en rotation, par l'accouplement de compensation (1.2) au boîtier (1.3), **caractérisé en ce que**
le boîtier (1.3) présente un autre dispositif de liaison par complémentarité de forme (1.31), le capteur de rotation étant pré-ajusté de telle sorte qu'une valeur angulaire prédéfinie peut être fournie par le capteur de rotation pendant le fonctionnement du capteur de rotation pour une position d'angle relative prédéfinie entre le dispositif de liaison par complémentarité de forme (2.11) de l'arbre (2.1) et l'autre dispositif de liaison par complémentarité de forme (1.31) du boîtier (1.3).

2. Capteur de rotation selon la revendication 1, **caractérisé en ce que** le disque de code (2.2) porte un codage absolu, de sorte qu'une position d'angle absolue et claire peut être détectée par le dispositif de balayage (1.11) dans les limites d'une rotation du disque de code (2.2).

3. Capteur de rotation selon la revendication 1 ou 2, **caractérisé en ce que** le stator (1) comprend une mémoire non volatile dans laquelle des données, qui représentent une information sur la position d'angle relative des deux dispositifs de liaison par complémentarité de forme (1.31 ; 2.11) l'un par rapport à l'autre, sont stockées en fonction du pré-ajustage.

4. Capteur de rotation selon l'une des revendications précédentes, **caractérisé en ce que** le boîtier (1.3) présente une bride (1.32), et le dispositif de liaison par complémentarité de forme (1.31) est disposé sur la bride (1.32).

5. Capteur de rotation selon l'une des revendications précédentes, **caractérisé en ce que** le dispositif de liaison par complémentarité de forme (1.31) du boîtier (1.3) est conçu comme une goupille d'ajustage.

6. Capteur de rotation selon l'une des revendications précédentes, **caractérisé en ce que** le dispositif de liaison par complémentarité de forme (2.11) de l'arbre (2.1) est conçu comme un composant asymétrique par rapport à l'axe (A).

7. Capteur de rotation selon l'une des revendications précédentes, **caractérisé en ce que** l'accouplement de compensation (1.2) est configuré de telle sorte que le pré-ajustage de la position d'angle relative entre les dispositifs de liaison par complémentarité de forme (1.31 ; 2.11) peut être effectué par déplacement relatif entre l'accouplement de compensation (1.2) et le corps (1.1) et/ou le boîtier (1.3).

8. Série de capteurs de rotation, chaque capteur de rotation de la série comprenant un stator (1) et un rotor (2), le rotor (2) étant disposé à chaque fois de façon rotative par rapport au stator (1) à l'aide d'un palier (3), et chaque rotor (2)
- présentant un arbre (2.1), un dispositif de liaison par complémentarité de forme (2.11) et un disque de code (2.2) étant fixés de façon solidaire en rotation sur l'arbre (2.1),
chaque stator (1) présentant
- un corps (1.1) avec un dispositif de balayage (1.11) pour le balayage du disque de code (2.2),
- un accouplement de compensation (1.2) et
- un boîtier (1.3),
le corps (1.1) étant relié radialement et axialement, de façon élastique mais rigide en rotation, par l'accouplement de compensation (1.2) au boîtier (1.3), **caractérisé en ce que**
le boîtier (1.3) présente un autre dispositif de liaison par complémentarité de forme (1.31), chaque capteur de rotation étant pré-ajusté de telle sorte qu'une valeur angulaire prédéfinie peut être fournie par le capteur de rotation pendant le fonctionnement du capteur de rotation respectif pour une seule et même position d'angle relative prédéfinie entre le dispositif respectif de liaison par complémentarité de forme (2.11) de l'arbre (2.1) et l'autre dispositif respectif de liaison par complémentarité de forme (1.31) du boîtier (1.3) respectif.

9. Série de capteurs de rotation selon la revendication 8, **caractérisé en ce que** chaque capteur de rotation de la série est conçu selon l'une des revendications 2 à 7.
